# FASCICULE DE BREVET EUROPEEN

(11) **EP 1 478 298 B1**
(45) Date de publication et mention de la délivrance du brevet: **07.12.2016**
(21) Numéro de dépôt: 03722685.9
(22) Date de dépôt: 28.02.2003
(51) Int. Cl.: A61C 1/08, A61C 8/00

(54) **PROCEDE ET DISPOSITIF POUR LA MISE EN PLACE D'IMPLANTS DENTAIRES**
VERFAHREN UND VORRICHTUNG ZUM EINSETZEN VON ZAHNIMPLANTATEN
METHOD AND DEVICE FOR PLACING DENTAL IMPLANTS

(30) Priorité: 28.02.2002 FR 0202587
(43) Date de publication de la demande: 24.11.2004
(73) Titulaire: Dentsply Implants NV, 3500 Hasselt (BE)
(72) Inventeur: TARDIEU, Philippe, F-38700 La Tronche (FR); VRIELINCK, Luc, B-3600 Genk (BE)
(74) Mandataire: Beck, Michaël Andries T.
(86) Numéro de dépôt international: PCT/FR2003/000667
(87) Numéro de publication internationale: WO 2003/071972

(56) Documents cités:
- WO-A-00/25695
- WO-A-99/26540
- DE-U- 29 917 458
- US-A- 4 109 382
- US-A- 5 320 529
- US-A- 5 800 168
- US-A- 5 989 258

## Description

### DOMAINE TECHNIQUE DE L'INVENTION

La présente invention concerne un procédé et un dispositif pour la mise en place d'implants dentaires.

### ARRIÈRE PLAN TECHNOLOGIQUE DE L'INVENTION

Des considérations esthétiques ou des indications thérapeutiques conduisent souvent à remplacer par des prothèses les dents manquantes de la denture fortement dégradée d'un patient. Les prothèses les plus courantes sont encore les prothèses à appui dentaire ou muqueux, tandis que se développe la pose de prothèses ancrées dans la mandibule ou le maxillaire du patient au moyen d'un ou plusieurs implants vissés dans des trous forés dans le tissu osseux.

Les techniques modernes d'imagerie médicale couplées à des techniques de robotique permettent de simuler en trois dimensions sur ordinateur la pose des implants avant toute intervention, et de fabriquer un gabarit de forage qui guidera le chirurgien-dentiste pendant l'opération. La mise en oeuvre de ces techniques a considérablement augmenté le taux d'obtention de bons résultats esthétiques, tout en diminuant le risque de complications post-opératoires.

Un procédé et un dispositif de ce type pour déterminer l'emplacement idéal d'un implant, et conçus pour la mise en place précise de celui-ci, sont décrits dans le brevet américain US-5.320.529, au nom de D. Pompa, publié le 14 juin 1994.

Un modèle stéréolithographique de l'os de la mâchoire est fabriqué à partir de coupes tomographiques, et permet au praticien de simuler sur ce modèle la pose des prothèses. Un gabarit chirurgical est réalisé par moulage du modèle de l'os et de modèles radio-opaques des implants en place, munis de leurs porte-implants. Des canons de forage de diamètres intérieurs correspondant à des forets de différentes tailles sont ensuite placés dans les empreintes des porte-implants.

Ce procédé permet d'obtenir un gabarit chirurgical précis, mais il n'utilise pas complètement les possibilités et les avantages d'une simulation sur ordinateur car ce gabarit est obtenu en reportant par moulage la simulation implantaire à partir d'un modèle réel de l'os, et non pas à partir du modèle virtuel.

Le gabarit de forage décrit dans la demande internationale WO 99/26540, au nom de M. Klein et al., publiée le 3 juin 1999, reprend le principe précédent de l'utilisation de canons de forage de différents diamètres insérés dans des alésages de diamètre unique, à la différence près que ceux-ci sont insérés dans des cylindres eux-mêmes placés dans des alésages forés directement dans le guide scannographique par une perceuse à commande numérique à partir des données scanner.

La contrainte d'une étape de moulage supplémentaire est donc éliminée en procédant de cette façon.

Cependant, le procédé et le système décrit dans la demande WO 99/26540 ne semblent s'appliquer qu'aux gabarits à appui dentaire, à l'exclusion des gabarits à appui osseux ou muqueux. De plus, les canons de forage sont maintenus en place dans les cylindres par une bride et une vis de serrage, ce qui constitue un inconvénient majeur. Outre les difficultés opératoires liées à la mise en place et au réglage d'un aussi grand nombre d'éléments dans la bouche du patient, ainsi qu'à l'instabilité de leur fixation, ce système de canons de forage de diamètres variés maintenus par des vis compromet aussi la sécurité de l'intervention car l'ingestion d'une des pièces reste toujours possible.

Les vues illustrant la publication (Practical Procedures & Aesthetic Dentistery, Vol. 13, N° 2, mars 2001, pages 165-9, M. Klein et al.) des résultats obtenus par la méthode et le dispositif objets de la demande WO 99/26540 montrent bien l'encombrement excessif de la bride du cylindre, et la difficulté à accéder à la vis sans tête de serrage, à six pans creux, en position radiale.

Le procédé pour fabriquer des modèles de parties du corps humain à partir d'images numériques divulgué par la Société Materialise dans le brevet belge BE-1.008.372, publié le 2 avril 1996, et appliqué notamment à l'implantologie assistée par ordinateur, conduit à une simplification supplémentaire en permettant la fabrication par stéréolithographie, technique de prototypage rapide bien connue en plasturgie, de modèles de mandibules, de maxillaires et de gabarits chirurgicaux correspondant à toute planification implantaire requise.

Le logiciel dérivé de ce procédé breveté pour l'acquisition des données scanner, la simulation sur ordinateur de la mandibule ou du maxillaire, la visualisation des projets d'implants et du gabarit, ainsi que le pilotage de la machine de prototypage, est commercialisé sous le nom de SurgiCase^{®} et offre au praticien une solution applicable couramment.

A partir des données scanner, l'implantologiste prépare au moyen du logiciel une planification implantaire virtuelle et transmet les résultats au bureau de service chargé de convertir ses données en des gabarits de forage réels. En cours d'opération, un gabarit est positionné sur la crête alvéolaire ; grâce aux formes complexes des mâchoires et des dents, la position du gabarit est unique et stable. Les gabarits contiennent des cylindres en acier inox implantable qui constituent des guides physiques pour les forets durant la chirurgie et permettent de contrôler les axes de forage de façon optimale. Plusieurs gabarits sont fabriqués avec des cylindres de diamètres différents permettant de tenir compte de la séquence de forage spécifique à chaque implant, et de bien s'adapter à chaque cas particulier. Quand le site est prêt, les implants sont insérés de manière habituelle au moyen de porte-implants.

Cependant, l'obligation d'utiliser plusieurs gabarits diminue un peu l'intérêt de la simplification obtenue en mettant en oeuvre le procédé de la Société Matérialise.

Le brevet US 5 989 258 décrit un appareil pour forer dans l'os de la mâchoire dans un processus d'implantation. L'appareil comprend, entre autres, un élément de support avec un alésage de guidage.

Le brevet US 5 800 168 décrit un gabarit avec un guide de forage ajustable. Avant le forage du trou de l'implant, la position et l'inclinaison du guide de forage peuvent être modifiées selon les besoins sans qu'il soit nécessaire de répéter la construction du gabarit.

Il ressort donc des documents cités ci-dessus que divers procédés et dispositifs de mise en place d'implants dentaires sont connus de l'état de la technique ; toutefois, ces procédés et dispositifs ne satisfont pas entièrement le praticien, qui demeure encore gêné par trop de contraintes dans leur utilisation.

### DESCRIPTION GÉNÉRALE DE L'INVENTION

La présente invention concerne donc un dispositif de mise en place d'implants dentaires visant à supprimer les contraintes d'utilisation des méthodes et systèmes de l'art antérieur.

Le dispositif pour la mise en place d'implants dentaires, selon la présente invention, comprend un gabarit comprenant des alésages d'axes et de positions prédéterminés munis d'au moins un cylindre de guidage de dimension prédéterminée. Le dispositif comprend en outre au moins un porte-implant qui se compose d'une part, d'un mandrin présentant successivement selon son axe une pièce complémentaire d'un porte-instrument, une collerette adaptée à arriver en butée sur la partie supérieure dudit cylindre de guidage, un manchon lisse d'un seul diamètre extérieur standard prédéterminé correspondant au diamètre intérieur standard desdits cylindres et une forme complémentaire de la tête standard desdits implants. Le porte-implant se compose d'autre part, d'une vis traversant ledit mandrin et qui est vissée dans ladite tête.

Selon une première variante de l'invention, le dispositif peut comprendre en plus un ensemble de rondelles de diamètre intérieur correspondant au diamètre du porte-implant, lesdites rondelles étant destinées a être insérées autour du manchon lisse de chacun desdits porte-implants afin de contrôler la profondeur de pénétration.

Selon une autre variante de l'invention, le porte-implant peut avoir une longueur standard prédéterminée, quelle que soit la hauteur desdits implants à mettre en place, constituant ainsi des porte-implants universels.

Selon encore une autre variante de l'invention, le dispositif pour la mise en place d'implants dentaires peut en plus comprendre un guide scannographique destiné à être placé dans la bouche du patient, un premier système d'acquisition sur ordinateur des données scanner dudit guide, et de la mandibule ou du maxillaire dudit patient, un deuxième système de simulation sur ordinateur de ladite mandibule ou dudit maxillaire à partir desdites données, un troisième système de génération par ordinateur de paramètres de planification implantaire à partir de ladite simulation, un quatrième système de formation dudit gabarit ce quatrième système étant pilotable par ordinateur, un cinquième système de pilotage par ordinateur à partir desdits paramètres dudit quatrième système, des canons de forage agencés coaxialement dans la partie supérieure desdits cylindres de guidage et des forets de diamètres correspondant aux diamètres intérieurs desdits canons, lesdits canons présentant tous un seul diamètre intérieur standard prédéterminé et lesdits forets présentant un premier ensemble de forets étagés et un second ensemble de forets calibreurs dont, respectivement, le diamètre maximal standard et le diamètre nominal standard correspondent au diamètre intérieur desdits canons.

Selon encore une autre variante de l'invention, chacun des forets étagés peut présenter successivement, selon son axe, de l'extrémité pointue à l'autre extrémité une première longueur de forage d'un seul diamètre standard prédéterminé en fonction desdits implants, une seconde longueur de forage, adjacente a ladite première longueur de forage, d'un seul diamètre standard prédéterminé en fonction desdits implants et supérieur au diamètre de ladite première longueur de forage, une partie lisse d'un seul diamètre standard prédéterminé en fonction desdits implants et correspondant au diamètre intérieur standard desdits canons, une collerette et un moyen de blocage standard pour pièce a main.

Selon encore une autre variante de l'invention, chacun des forets calibreurs peut présenter successivement selon son axe, de l'extrémité pointue a l'autre extrémité une première longueur de coupe d'un seul diamètre standard prédéterminé correspondant au diamètre intérieur standard desdits canons, une seconde longueur de coupe de diamètre sensiblement inférieur au diamètre de ladite première longueur de coupe, une zone lisse d'un seul diamètre standard prédéterminé en fonction desdits implants et correspondant au diamètre intérieur unique desdits canons, une collerette et un moyen de blocage standard pour pièce a main.

Selon encore une autre variante de l'invention, les alésages peuvent être de hauteurs variables afin de limiter sans moyen supplémentaire la profondeur de pénétration des forets dans la mandibule ou le maxillaire.

Selon encore une autre variante de l'invention, le dispositif pour la mise en place d'implants dentaires peut comporter de plus un ensemble d'anneaux de diamètre intérieur correspondant au diamètre des forets, lesdits anneaux étant destinés a être insérés autour de la partie lisse ou de la zone lisse de chacun des forets afin de contrôler la profondeur de pénétration.

Selon encore une autre variante de l'invention, les forets étagés et les forets calibreurs peuvent tous être d'une seule longueur standard prédéterminée en fonction desdits implants, quelle que soit la profondeur des trous à réaliser, constituant ainsi des forets universels.

Selon encore une autre variante de l'invention, les cylindres et les canons peuvent comporter respectivement un filetage intérieur et un filetage extérieur présentant quatre hélices a 90° l'une de l'autre.

Selon encore une autre variante de l'invention, chacun des canons peut présenter une bague comportant une lumière tangentielle.

Selon encore une autre variante de l'invention, chacun des canons peut présenter une bague comportant quatre trous borgnes radiaux à 90° l'un de l'autre.

Selon encore une autre variante de l'invention, les anneaux et les rondelles peuvent être en matière plastique bio-compatible, de préférence en poly-oxy-méthacrylate (POM). Selon encore une autre variante de l'invention, les cylindres peuvent être en alliage de titane, préférentiellement TA6V.

Selon encore une autre variante de l'invention, les canons peuvent être en acier, préférentiellement en INOX 316L.

Selon encore une autre variante de l'invention, le mandrin peut être en alliage de titane, préférentiellement TA6V.

Des porte-implants d'une seule longueur standard prédéterminée en fonction du type d'implants, constituant ainsi des porte-implante «universels», tirent bénéfice de cette dernière disposition.

De préférence, les cylindres et les canons de forage du dispositif selon l'invention comportent respectivement un filetage intérieur et un filetage extérieur présentant quatre hélices à 90° l'une de l'autre.

De manière très avantageuse, chacun des canons de ce dispositif présente une bague comportant une lumière tangentielle.

Alternativement ou simultanément, cette bague comporte quatre trous borgnes radiaux à 90° l'un de l'autre.

Selon une caractéristique additionnelle du dispositif pour la mise en place d'implants dentaires objet de la présente demande, les anneaux et les rondelles destinés respectivement à être insérés autour soit des forets, soit des porte-implants, sont en matière plastique bio-compatible, de préférence en poly-oxy-méthacrylate (POM).

Avantageusement, les cylindres de guidage dans le gabarit sont quant à eux en alliage de titane, préférentiellement TA6V, ainsi que les mandrins des porte-implants, tandis que les canons sont en acier, préférentiellement en INOX 316L.

Ces quelques spécifications essentielles rendent évidents pour l'homme du métier les avantages apportés par le procédé et le dispositif de mise en place d'implants dentaires selon l'invention par rapport à l'état de la technique antérieur.

Les spécifications détaillées de l'invention, et notamment des exemples de sélections avantageuses de caractéristiques dimensionnelles du dispositif, sont données dans la description qui suit en liaison avec les dessins ci-joints. Il est à noter que ces dessins n'ont d'autre but que d'illustrer le texte de la description et ne constituent en aucune sorte une limitation de la portée de l'invention.

### BRÈVE DESCRIPTION DES DESSINS

La Figure 1 est une représentation synoptique de la succession d'étapes que comportent les procédés de mise en place d'implants dentaires connus de l'état de la technique auxquels se rapporte la présente invention.
La Figure 2 est une vue éclatée d'une partie du dispositif selon l'invention au cours de l'étape de forage, montrant notamment le gabarit de forage, les guides et un foret étagé et son anneau.
Les Figures 3a et 3b sont respectivement une vue en coupe (selon A-A) et une vue de dessus d'un cylindre de guidage du gabarit.
Les Figures 4a et 4b sont respectivement une vue de face et une vue de dessus d'un canon de forage du gabarit.
Les Figures 5a et 5b sont respectivement une vue en coupe (selon B-B) et une vue de dessus d'un anneau de foret utilisé pour limiter la profondeur de pénétration.
Les Figures 6 et 7 sont respectivement une vue de face d'un foret étagé et d'un foret calibreur.
La Figure 8 est une vue éclatée d'une partie du dispositif selon l'invention au cours de l'étape de placement des implants, montrant notamment le gabarit de forage, un implant, une rondelle, un porte-implant, et sa vis.
Les Figures 9a et 9b sont respectivement une vue de face et une vue de dessus d'un porte-implant selon l'invention.
La Figure 10 est une vue de face de la vis de porte-implant correspondante.

### DESCRIPTION DES FORMES PRÉFÉRÉES DE L'INVENTION

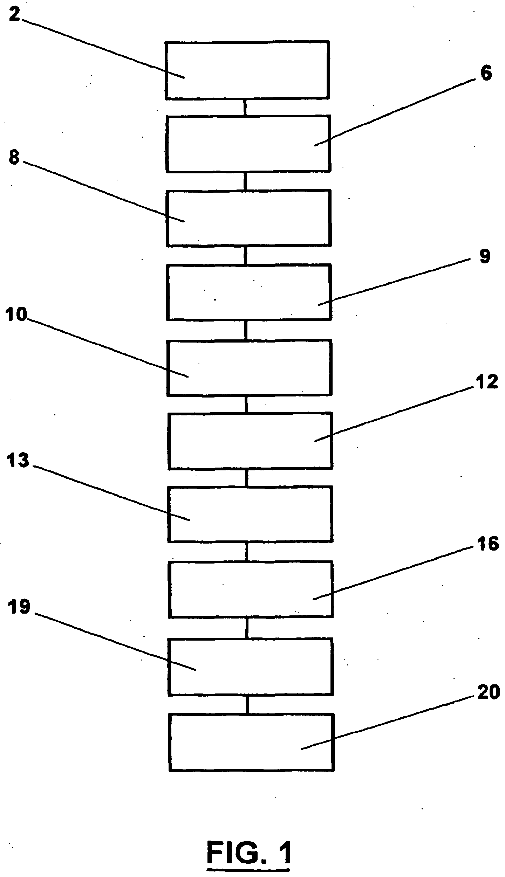

La Figure 1 montre schématiquement l'enchaînement connu en soi des différentes opérations aboutissant à la mise en place d'implants 1 dentaires dans la bouche d'un patient.

Dans une étape préliminaire 2, le praticien ayant à sa disposition un système d'implantologie assistée par ordinateur décide avec le patient de la mise en place d'implants 1. Ce système est un ensemble complexe de procédés et de matériels optimisés en fonction du but à atteindre. Il s'ensuit que les caractéristiques de chacun des éléments de ce système sont fortement interdépendantes, et conduisent à des standards de faits, résultats de la généralisation de certains « systèmes propriétaires » commercialisés par les plus importants fabricants de matériels médicaux. L'implantologiste doit donc disposer au départ du matériel (implants 1, porte-implants 3, forets 4,5, etc..) adapté au reste du système qu'il se propose de mettre en oeuvre. Il va de soi que l'intérêt du patient et du praticien est que le système utilisé soit le plus simple et le plus fiable possible..

Un guide scannographique est placé (étape 6) dans la bouche du patient, puis celui-ci passe son scanner de manière habituelle. Un tel guide scannographique comporte des marqueurs radio-opaques qui permettront par la suite, selon des procédés connus, de faire coïncider le repère de référence des images radiologiques acquises sur ordinateur au cours de cette étape 8 avec les repères des prothèses réelles.

A l'issue de cet examen, les données scanner du guide et de la mâchoire 7 du patient sont expédiées à un bureau de service, qui convertit les données brutes et les prépare avant de les transmettre à l'implantologiste.

Le logiciel à la disposition du praticien effectue une reconstruction virtuelle de la mandibule 7 ou du maxillaire de son patient à partir des données scanner préparées. Cette simulation 9 sur ordinateur permet de créer une planification implantaire 10 en visualisant les emplacements des futurs implants 1. Les paramètres de la planification 10 seront retransmis au bureau de service pour la fabrication 12 du gabarit de forage 11.

De façon connue en soi, le bureau de service utilise au cours de cette phase de fabrication 12 les données reçues pour piloter un dispositif de stéréolithographie, lequel dispositif présente l'avantage sur la fraiseuse numérique de pouvoir fabriquer des pièces comportant des cavités fermées.

Le bureau de service colle (étape 13) des cylindres de guidage 14 à l'intérieur des alésages 15 du gabarit 11 et expédie celui-ci, ainsi qu'un modèle réel de la mâchoire 7, à l'implantologiste. Ces cylindres 14 sont d'une dimension standard, choisie en fonction du type des implants 1 qui seront posés.

Pendant l'étape suivante 16, c'est-à-dire pendant l'opération chirurgicale de pose des implants 1 en elle-même, le praticien utilise le gabarit 11 pour forer les trous 17 destinés à recevoir les implants 1, chacun au point voulu et dans la bonne direction comme prévu dans la planification 10.

De façon à limiter l'échauffement du tissu osseux 7, on fore d'abord un trou de petit diamètre avant de passer à un diamètre supérieur pour atteindre le diamètre nominal. Classiquement, on utilise cinq forets pour préparer le site d'implantation. Les cylindres de guidage 14 du gabarit 11 ayant un diamètre donné, plusieurs gabarits 11 sont donc en général nécessaires pour réaliser une séquence de forage, à moins d'utiliser une série de canons 18 d'adaptation insérés dans les cylindres 14.

Cette dernière façon de faire est retenue dans le procédé selon l'invention, mais, à la différence de l'art antérieur, dans cette étape 16, les canons de forage 18 ne sont que d'une seule sorte, de diamètre intérieur prédéterminé en fonction du type d'implants 1. La manipulation de plusieurs canons 18 pour chaque forage est donc éliminée : le même canon 18 standard est vissé dans le cylindre 14 pour toute la durée du forage.

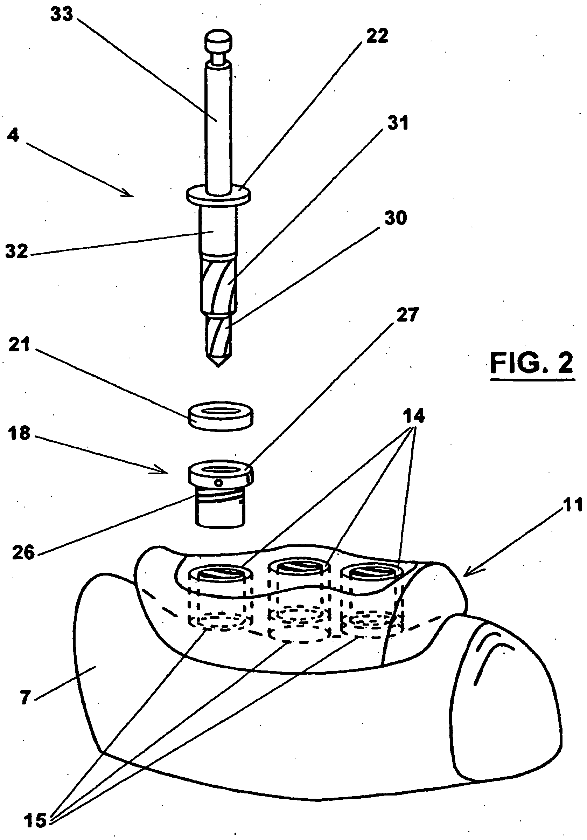

Ceci est rendu possible grâce à l'utilisation, au cours de la phase de forage 19, de deux forets 4,5 seulement, d'un type particulier : un foret dit «foret étagé» 4, puis un foret dit «foret calibreur» 5. Tous ces éléments seront décrits en détails en liaison avec les Figures 2, 3, 4, 6, et 7.

Le processus de mise en place de l'implant 1 s'achève par l'introduction de celui-ci au moyen d'un porte-implant 3 dans l'ostéotomie 17 pratiquée précédemment. Au cours de cette étape finale 20, l'implant 1 est dirigé correctement par un type particulier de porte-implant 3, propre au procédé selon l'invention, qui est guidé par coulissement dans le cylindre 14 du gabarit 11.

Les gabarits de forage 11 utilisés présentent normalement des alésages 17 d'une même hauteur prédéterminée à la commande par le praticien en fonction du type d'implants 1 qu'il sera amené à utiliser (« Standard », « Wide », ou « Zygomatique »). Chaque type d'implants 1. existe en plusieurs longueurs. Pour forer des cavités 17 de profondeurs correspondantes, il faut donc changer de foret 4,5.

Le procédé selon l'invention propose de ne conserver que les forets 4,5 les plus longs ( Forets « universels » pour le type d'implants 1 considéré) et d'adapter leurs longueurs en utilisant des anneaux 21 d'épaisseur connue. Ces anneaux limitent la profondeur de pénétration du foret 4,5 dans l'os 7 en comblant plus ou moins l'espace libre entre le sommet du gabarit 11 placé sur la crête osseuse et une butée 22 axiale dont sont munis tous les forets 4,5.

Le même principe est appliqué aux porte-implants 3 : des rondelles 23 insérées autour de la tige 24 servent à limiter la profondeur de vissage de l'implant 1. De cette façon, la diversité des longueurs des porte-implants 3 est limitée à la seule combinatoire des types d'implants 1 et des types «osseux» ou «muqueux» des porte-implants 3.

Dans une variante de la méthode, pour éviter l'emploi d'anneaux 21, le praticien spécifie à la fabrication les hauteurs des alésages 15 du gabarit 11. Dans ce procédé, c'est alors la hauteur du tube stéréolithographique 17 qui change et non pas le foret 4,5. Plus le tube stéréolithographique 17 est profond, moins le forage est profond, en utilisant les mêmes cylindres de guidage 14 et canons de forage 18. Ce procédé a trois avantages : d'abord de n'utiliser qu'une seule longueur de foret 4,5 pour toutes les profondeurs ; ensuite de ne pas avoir à contrôler les profondeurs à chaque forage, puisque ceci est pré-établi par le gabarit 11; enfin, dans le cas des gabarits 11 à appui muqueux, cela permet de tenir compte de l'épaisseur de la muqueuse qui est inégale suivant les zones implantaires, sans faire aucun calcul, ni aucune adaptation.

Tous les éléments d'un système d'implantologie assistée par ordinateur adapté à la mise en oeuvre du procédé qui a été expliqué de façon approfondie ci-dessus ne seront pas rappelés ici en détail. Seules seront décrites ci-dessous les parties du dispositif spécifiques à l'invention.

La Figure 2 montre bien le gabarit de forage 11 calé sur la crête osseuse d'une mandibule 7, avec les cylindres de guidage 14 en place dans les alésages 15. Cette situation correspond au moment de la phase 16 où le praticien a déjà vissé les canons de forage 18 dans les cylindres 14 (le canon 18 est ici dessiné au-dessus du cylindre 14 pour la clarté de la représentation), et engage la phase opératoire de forage 19.

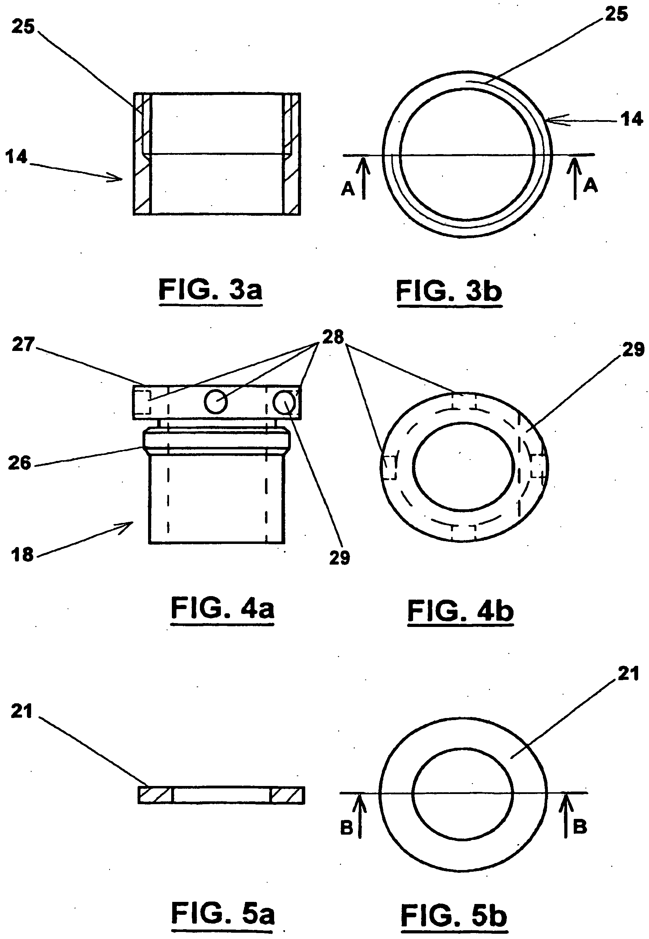

Le foret étagé «universel» 4 est muni d'un anneau 21 si la hauteur des alésages 15 n'est pas suffisante pour limiter sa pénétration à une profondeur correspondant à la taille de l'implant 1. Les caractéristiques détaillées de tous les éléments de la Figure 2 sont représentées sur les Figures 3 à 7.

Le cylindre de guidage 14 vu en coupe sur la Figure 3a, et de dessus sur la Figure 3b, comporte une partie supérieure filetée 25 s'étendant sur la moitié de sa hauteur. Le filetage présente quatre hélices en creux décalées de 90°, ce qui facilite le vissage et le dévissage.

Le cylindre 14 a une hauteur de 4 mm. Il présente un diamètre intérieur, à la tolérance H7, de 4,20 mm au niveau de la partie non filétée. Son diamètre extérieur est de 5,20 mm. Ces dimensions conviennent pour les implants 1 de type «standard», présentant un diamètre extérieur de 3,75 mm ou 4,00 mm, c'est à dire dans 97% des cas. Des cylindres 14 de dimensions différentes existent pour des implants 1 de type «Wide», de 4,75 mm, 5 mm ou 6 mm de diamètre.

Les cylindres 14 sont réalisés en métal implantable, de préférence en alliage de titane TAV6.

Le canon de forage 18, vu de face sur la Figure 4a et de dessus sur la Figure 4b, comporte un pas de vis externe 26 qui est proche de l'extrémité supérieure et est complémentaire de la partie filetée 25 du cylindre 14. Les quatre hélices en relief décalées permettent d'engager le canon 18 dans son cylindre en un quart de tour seulement.

La manipulation et le serrage/desserrage du canon 18 au moyen d'un outil sont rendus plus aisés grâce à une bague 27 entourant son extrémité supérieure, et présentant quatre trous borgnes radiaux 28. Une lumière cylindrique tangentielle 29 permet de passer un fil de soie servant de «parachute».

Le canon de forage 18 a une hauteur de 5 mm et, en dehors du filetage, son diamètre extérieur est de 4,20 mm à la tolérance g6, c'est-à-dire correspondant au diamètre intérieur du cylindre 14, et adapté aux cas les plus courants. Le diamètre extérieur de la bague 27 est de 5,2 mm et sa hauteur de 0,5 mm. Le diamètre intérieur du canon 18 est de 3,20 mm pour guider des forets 4,5 de 3,15 mm de diamètre.

Les canons de forage 18 sont fabriqués en acier, de préférence en acier INOX 316L.

L'anneau représenté sur les Figures 5a et 5b ne présente pas de caractéristique particulière autre que des dimensions adaptées au système. Son diamètre extérieur est le diamètre commun à la bague 27 du canon de forage 18 et à la collerette 22 des forets 4,5 entre lesquelles il est placé, soit 5,2 mm. Son diamètre intérieur de 3,10 mm est légèrement inférieur au diamètre de 3,15mm des forets 4,5 afin qu'il adhère à ceux-ci.

Ces anneaux 21 sont fabriqués en poly-oxy-méthacrylate (POM). Des anneaux 21 d'une épaisseur de 0,5 mm sont de préférence en POM naturel de couleur blanche, tandis que des anneaux 21 d'une épaisseur de 1,5 mm sont de préférence colorés en noir, afin d'être plus facilement distingués les uns des autres.

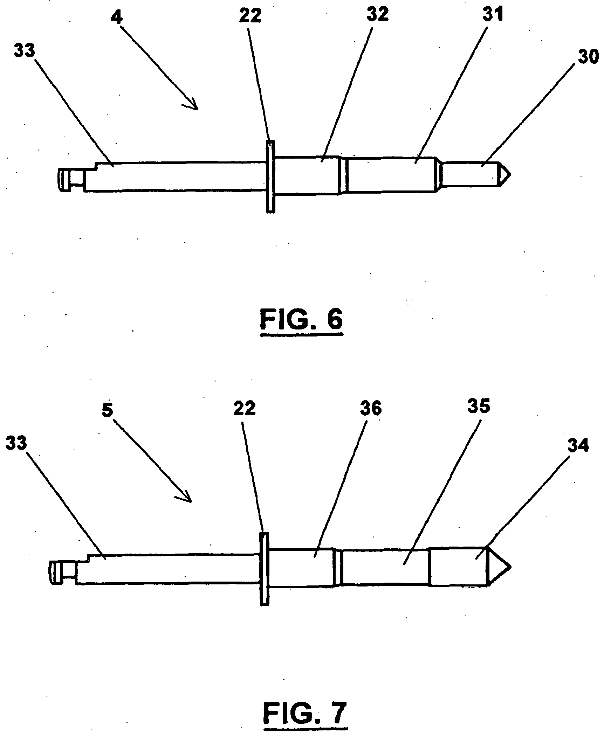

Le foret étagé 4 représenté sur la Figure 6 permet de remplacer la fraise boule, le foret de 2 mm et le foret pilote par un seul foret.

Un foret étagé 4 pour un implant 1 de 10 mm de long, mais représentatif du système dans le cas d'implants 1 standards, présente typiquement :
- une partie conique d'un angle d'ouverture de 120° suivie d'une première longueur de forage 30 de 2 mm de diamètre et mesurant 4 mm,
- une seconde longueur de forage 31 de 3 mm de diamètre et mesurant 6 mm, y compris le raccord conique, d'un angle d'ouverture de 120°, avec la première longueur de forage 30,
- une partie lisse 32 de 3,15 mm de diamètre et de 5 mm de long, y compris le raccord conique, d'un demi-angle d'ouverture de 10°, avec la seconde longueur de forage 31,
- une collerette 22 de 5,2 mm de diamètre et de 0,5 mm d'épaisseur, et
- un moyen de blocage standard pour pièce à main 33 d'une longueur totale de 14 mm.

Des forets étagés 4 pour des longueurs d'implants de 13, 15 ou 18 mm existent aussi mais, comme il a déjà été expliqué, le foret 4 le plus long de la série fait office de foret «universel» employé avec des anneaux 21 en POM ou avec un gabarit 11 présentant des alésages 15 de hauteurs variables.

Le foret calibreur 5 représenté sur la Figure 7 comporte une partie supérieure 22,33 identique à celle du foret étagé 4.

Dans le cas d'un implant 1 standard d'une longueur de 10 mm, la partie inférieure de ce foret 5 présente typiquement :
- une partie conique d'un angle d'ouverture de 120° suivie d'une première longueur de coupe 34 de 3,15 mm de diamètre et mesurant 4 mm,
- une seconde longueur de coupe 35 de 3,00 mm de diamètre et mesurant 6 mm,
- une zone lisse 36 de 3,15 mm de diamètre et mesurant 5 mm de long, y compris le raccordement conique à la seconde longueur de coupe 35 d'un demi-angle d'ouverture de 10°.

Les forets étagés 4 ainsi que les forets calibreurs 5 sont fabriqués en acier inoxydable, de préférence de type Z33C13.

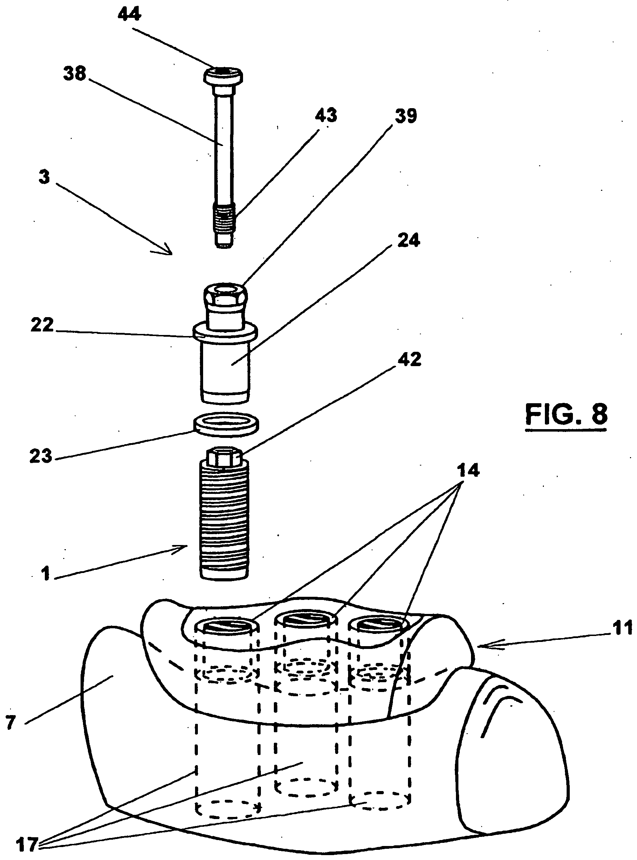

La Figure 8 montre un implant 1, un porte-implant 3 et le gabarit 11 au cours de l'étape de placement 20 des implants 1 suivant l'étape de forage 19 (les éléments ont été ici dissociés pour la clarté de la représentation). Les cavités 17 forées dans le tissu osseux 7 à l'emplacement exact prévu par la planification implantaire 10 vont accueillir les implants 1. Les cylindres de guidage 14 du gabarit 11, dont les canons de forage 18 ont été dévissés, permettent de guider précisément les implants 1 grâce à des porte-implants 3 spécifiques.

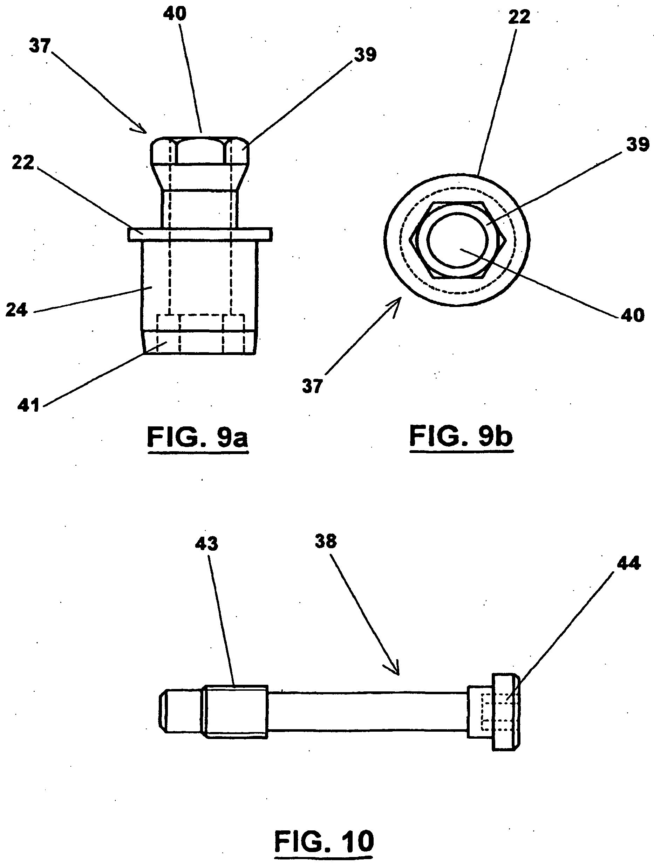

Chacun de ces porte-implants 3 selon l'invention comporte d'une part un ensemble de forme composite formant un mandrin 37 et d'autre part une vis de fixation 38 de l'implant 1. Ces deux éléments sont représentés respectivement sur les Figures 9 et 10.

Le mandrin 37 comporte une partie supérieure 39 de section hexagonale formant une pièce complémentaire d'un porte-instrument. Cette partie 39 présente un alésage axial 40 et est reliée à un manchon lisse 24 par une collerette 22 identique à celle des forets 4,5. La base du mandrin 37 comporte une cavité 41 de section hexagonale complémentaire de la tête hexagonale 42, munie d'un trou borgne fileté, d'un implant 1. La vis 38 traversant le mandrin 37 est vissée au moyen de son extrémité filetée 43 dans la tête hexagonale 42 afin de rendre solidaire l'implant 1 du porte-implant 3. Pour ce faire, la tête de la vis 38 du porte-implant 3 est avantageusement du type de celles à six pans creux 44.

Le diamètre extérieur du manchon 24 du mandrin 37 correspond au diamètre intérieur d'un cylindre de guidage 14. De la sorte, l'implant 1 est guidé au cours de sa mise en place par le coulissement du manchon 24 dans le cylindre 14 du gabarit 11. La collerette 22 arrivant en butée sur la partie supérieure du cylindre 14 limite l'enfoncement au niveau souhaité par le chirurgien. Ainsi qu'il a déjà été expliqué, des rondelles 23 en POM permettent de contrôler précisément ce niveau de pénétration.

Les porte-implants 3 se divisent en deux types principaux selon leur longueur : les porte-implants osseux, courts, et les porte-implants longs, adaptés aux mises en place transmuqueuses.

Pour les implants 1 standards, le diamètre extérieur du manchon 24 d'un porte-implant 3 est de 4,15 mm, ce qui procure un coulissement doux dans un cylindre 14 présentant un diamètre intérieur de 4,20 mm. La hauteur du manchon 24 (hauteur du porte-implant sous la collerette) est de 4,5 mm pour les porte-implants osseux, et de 10,5 mm pour les porte-implants muqueux. La longueur totale de la vis 38 du porte-implant 3 est respectivement de 13,5 mm et 19,5 mm. Dans les cas du porte-implant osseux « universel » et du porte-implant muqueux «universel», le manchon 24 mesure respectivement 10,0 mm et 15,0 mm de haut, et la vis 38 a respectivement 19,0 mm et 24,0 mm de long. Les six pans creux 41 de la base du mandrin 24 et le filetage M2 43 de la vis 38 sont compatibles avec la plupart des implants 1 du marché.

Les rondelles 23 de porte-implants 3 sont en même matière plastique bio-compatible que les anneaux 21 de forets 4,5. Dans le cas d'implants standards, leur diamètre extérieur est celui des collerettes 22, et leur diamètre intérieur est de 4,10 mm, diamètre légèrement inférieur au diamètre extérieur du manchon 24. Leur épaisseur est soit 0,5 mm, soit 1,5 mm. De préférence, les plus minces sont blanches et les plus épaisses sont noires afin de ne pas être confondues.

L'ensemble de ces caractéristiques procure au procédé et au dispositif de mise en place d'implants dentaires selon l'invention plusieurs avantages notables par rapport à l'état de la technique :
- deux forets seulement sont utilisés (par type d'implants) au lieu de plusieurs forets de différentes longueurs et de différents diamètres,
- le gabarit spécifique permet des forages sans calcul et sans ajustement à la bonne profondeur,
- un seul modèle de canon de forage est nécessaire (par type d'implants) au lieu d'une série de canons présentant un diamètre intérieur croissant,
- la manipulation des canons est facilité car Leur conception mécanique spécifique permet leur engagement dans les cylindres de guidage par simple vissage en un quart de tour,
- la sécurité est accrue car les canons possèdent un «parachute», et
- les porte-implants sont guidés précisément au cours de la mise en place de l'implant.

Le procédé et le dispositif décrits ci-dessus peuvent encore être dans certains cas simplifiés de manière à ne plus utiliser d'anneau 21 et/ou de rondelle 23 pour adapter les longueurs de pénétration des forets 4, 5 et, respectivement, celles des porte-implants 3, quelle que soit la profondeur de forage, l'épaisseur de la gencive ou le niveau d'enfoncement des implants.

On sait que les forets les plus fréquemment utilisés ont pour longueurs 10, 13, 15, 18 et 20 mm.

Par ailleurs, les longueurs d'implants les plus fréquemment utilisées sont : 8,5 ; 10 ; 11,5 ; 13 ; 15 ; 18 et 20 mm.

Sachant que X est égal à la longueur du foret utilisé ou utilisable diminuée de la longueur de l'implant à mettre en place, X doit permettre d'utiliser un porte-implant disponible, sans anneau ni rondelle, en choisissant X + 4 pour longueur du porte-implant.

Chaque fois que cela sera possible, on choisira donc une valeur de X telle qu'elle puisse répondre aux deux conditions préalables précitées en retenant un foret d'une longueur spécifique et un porte-implant d'une longueur également spécifique.

Ainsi, cette valeur X sera indépendante de l'enfoncement de l'implant dans l'os et de sa position par rapport à la crête osseuse, mais aussi indépendante du mode opératoire (guide osseux ou guide muqueux), indépendante de la mesure de l'épaisseur de la gencive et indépendante de la détermination de la surface de la crête de l'os.

Dans la plupart des cas, il sera ainsi possible de forer puis de mettre en place un implant sans avoir à utiliser ni anneau 21 ni rondelle 23, ou en ayant à utiliser un anneau, mais pas de rondelle, ou une rondelle, mais pas d'anneau.

Des longueurs de porte-implants de 4, 5, 6, 7, 9, 10, 11, 12, 13, 14 et 17 mm permettront en pratique de répondre à tous les cas de figure précités, c'est-à-dire d'éviter l'emploi d'un anneau et/ou l'emploi d'une rondelle.

Comme il va de soi, l'invention ne se limite pas aux seuls modes d'exécution préférentiels décrits ci-dessus. Elle embrasse au contraire toutes les variantes possibles de réalisation qui ne sortiraient pas du cadre de la présente invention tel que défini par les revendications ci-après.

## Revendications

1. Dispositif pour la mise en place d'implants (1) dentaires comprenant:
a) un gabarit de forage (11) comprenant des alésages (15) d'axes et de positions prédéterminés munis d'au moins un cylindre de guidage (14) de dimension prédéterminée,
b) au moins un porte-implant (3) se composant :
- d'une part, d'un mandrin (37) présentant successivement selon son axe :
= une pièce (39) complémentaire d'un porte-instrument,
= une collerette (22), adaptée à arriver en butée sur la partie supérieure dudit cylindre de guidage (14),
= un manchon (24) lisse d'un seul diamètre extérieur standard prédéterminé correspondant au diamètre intérieur standard desdits cylindres (14),
= une forme (41) complémentaire de la tête (42) standard desdits implants (1), et
- d'autre part, d'une vis (38) adaptée à traverser ledit mandrin (37) et à être vissée dans ladite tête (42).

2. Dispositif pour la mise en place d'implants (1) dentaires selon la revendication 1, qui comprend en plus un ensemble de rondelles (23) de diamètre intérieur correspondant au diamètre du porte-implant (3), lesdites rondelles (23) étant destinées a être insérées autour du manchon (24) lisse de chacun desdits porte-implants (3) afin de contrôler la profondeur de pénétration.

3. Dispositif pour la mise en place d'implants (1) dentaires selon l'une quelconque des revendications 1 à 2, dans lequel le porte-implant (3) a une longueur standard prédéterminée, quelle que soit la hauteur desdits implants (1) a mettre en place, constituant ainsi des porte-implants universels.

4. Dispositif pour la mise en place d'implants (1) dentaires selon l'une quelconque des revendications 1 à 3 précédentes, comprenant :
a) un guide scannographique destiné à être placé dans la bouche du patient,
b) un premier système d'acquisition sur ordinateur des données scanner dudit guide, et de la mandibule ou du maxillaire (7) dudit patient,
c) un deuxième système de simulation sur ordinateur de ladite mandibule ou dudit maxillaire (7) à partir desdites données,
d) un troisième système de génération par ordinateur de paramètres de planification implantaire à partir de ladite simulation,
e) un quatrième système de formation dudit gabarit (11) ce quatrième système étant pilotable par ordinateur,
f) un cinquième système de pilotage par ordinateur à partir desdits paramètres dudit quatrième système,
g) des canons de forage (18) agencés coaxialement dans la partie supérieure (15) desdits cylindres de guidage (14),
h) des forets (4,5) de diamètres correspondant aux diamètres intérieurs desdits canons (18), lesdits canons (18) présentant tous un seul diamètre intérieur standard prédéterminé et lesdits forets (4, 5) présentant un premier ensemble de forets étagés (4) et un second ensemble de forets calibreurs (5) dont, respectivement, le diamètre maximal standard et le diamètre nominal standard correspondent au diamètre intérieur desdits canons (18).

5. Dispositif pour la mise en place d'implants (1) dentaires selon la revendication 4, **caractérisé en ce que** chacun des forets étagés (4) présente successivement, selon son axe, de l'extrémité pointue à l'autre extrémité :
- une première longueur de forage (30) d'un seul diamètre standard prédéterminé en fonction du type desdits implants (1),
- une seconde longueur de forage (31), adjacente à ladite première longueur de forage (30), d'un seul diamètre standard prédéterminé, supérieur au diamètre de ladite première longueur de forage (30),
- une partie lisse (32) d'un seul diamètre standard prédéterminé, correspondant au diamètre intérieur standard desdits canons (18),
- une collerette (22), et
- un moyen de blocage standard pour pièce à main (33).

6. Dispositif pour la mise en place d'implants (1) dentaires selon l'une quelconque des revendications 4 ou 5 précédentes, **caractérisé en ce que** chacun des forets calibreurs (5) présente successivement selon son axe, de l'extrémité pointue à l'autre extrémité :
- une première longueur de coupe (34) d'un seul diamètre standard prédéterminé correspondant au diamètre intérieur standard desdits canons (18),
- une seconde longueur de coupe (35) de diamètre sensiblement inférieur au diamètre de ladite première longueur de coupe (34),
- une zone lisse (36) d'un seul diamètre standard prédéterminé correspondant au diamètre intérieur unique desdits canons (18),
- une collerette (22), et
- un moyen de blocage standard pour pièce à main (33).

7. Dispositif pour la mise en place d'implants (1) dentaires selon l'une quelconque des revendications 4 à 6 précédentes, **caractérisé en ce que** les alésages (15) sont de hauteurs variables afin de limiter sans moyen supplémentaire la profondeur de pénétration des forets (4,5) dans la mandibule ou le maxillaire (7).

8. Dispositif pour la mise en place d'implants (1) dentaires selon l'une quelconque des revendications 5 ou 6 précédentes, **caractérisé en ce qu'**il comporte de plus un ensemble d'anneaux (21) de diamètre intérieur correspondant au diamètre des forets (4, 5), lesdits anneaux (21) étant destinés à être insérés autour de la partie lisse (32) ou de la zone lisse (36) de chacun des forets (4,5) afin de contrôler la profondeur de pénétration.

9. Dispositif pour la mise en place d'implants (1) dentaires selon l'une quelconque des revendications 5ou 6 précédentes, **caractérisé en ce que** les forets étagés (4) et les forets calibreurs (5) sont tous d'une seule longueur standard prédéterminée en fonction du type desdits implants (1), quelle que soit la profondeur des trous (17) à réaliser, constituant ainsi des forets universels.

10. Dispositif pour la mise en place d'implants (1) dentaires selon l'une quelconque des revendications 4 à 9 précédentes, **caractérisé en ce que** les cylindres (14) et les canons (18) comportent respectivement un filetage intérieur (25) et un filetage extérieur (26) présentant quatre hélices à 90° l'une de l'autre.

11. Dispositif pour la mise en place d'implants (1) dentaires selon l'une quelconque des revendications 4 à 10 précédentes, **caractérisé en ce que** chacun des canons (18) présente une bague (27) comportant une lumière tangentielle (29).

12. Dispositif pour la mise en place d'implants (1) dentaires selon l'une quelconque des revendications 4 à 11 précédentes, **caractérisé en ce que** chacun des canons (18) présente une bague (27) comportant quatre trous borgnes (28) radiaux à 90° l'un de l'autre.

13. Dispositif pour la mise en place d'implants (1) dentaires selon l'une quelconque des revendications 8 ou 11 précédentes, **caractérisé en ce que** les anneaux (21) et les rondelles (23) sont en matière plastique bio-compatible, de préférence en poly-oxy-méthacrylate (POM).

14. Dispositif pour la mise en place d'implants dentaires selon l'une quelconque des revendications 1 à 13 précédentes, **caractérisé en ce que** les cylindres (14) sont en alliage de titane, préférentiellement TA6V.

15. Dispositif pour la mise en place d'implants (1) dentaires selon l'une quelconque des revendications 4 à 14 précédentes, **caractérisé en ce que** les canons (18) sont en acier, préférentiellement en INOX 316L.

16. Dispositif pour la mise en place d'implants (1) dentaires selon une quelconque des revendications 1 à 15, **caractérisé en ce que** le mandrin (37) est en alliage de titane, préférentiellement TA6V.

## Patentansprüche

1. Vorrichtung zum Einbringen von Zahnimplantaten (1), umfassend:
a) eine Bohrschablone (11), die Bohrungen (15) von vorbestimmten Achsen und Positionen aufweist, die mit mindestens einem Führungszylinder (14) von vorbestimmter Abmessung ausgestattet sind,
b) mindestens einen Implantathalter (3), bestehend aus:
- einerseits einem Dorn (37), der nacheinander entlang seiner Achse Folgendes aufweist:
= ein Stück (39), das komplementär zu einem Instrumentenhalter ist,
= einen Kragen (22), der geeignet ist, in Anlage auf dem oberen Teil des Führungszylinders (14) zu kommen,
= eine glatte Muffe (24) von einem einzigen vorbestimmten Standarddurchmesser, der dem Standard-Innendurchmesser der Hülsen (14) entspricht,
= eine Form (41), die komplementär zu dem Standardkopf (42) der Implantate (1) ist, und
- andererseits einer Schraube (38), die geeignet ist, den Dorn (37) zu durchqueren und in den Kopf (42) geschraubt zu werden.

2. Vorrichtung zum Einbringen von Zahnimplantaten (1) nach Anspruch 1, die ferner einen Satz Scheiben (23) von einem Innendurchmesser aufweist, der dem Durchmesser des Implantathalters (3) entspricht, wobei die Scheiben (23) dazu bestimmt sind, um die glatte Muffe (24) von jedem der Implantathalter (3) eingefügt zu werden, um die Eindringtiefe zu kontrollieren.

3. Vorrichtung zum Einbringen von Zahnimplantaten (1) nach einem der Ansprüche 1 bis 2, wobei der Implantathalter (3) eine vorbestimmte Standardlänge aufweist, unabhängig von der Höhe der einzubringenden Implantate (1), wodurch auf diese Weise universelle Implantathalter gebildet werden.

4. Vorrichtung zum Einbringen von Zahnimplantaten (1) nach einem der vorhergehenden Ansprüche 1 bis 3, umfassend:
a) eine Scanführung, die dazu bestimmt ist, in dem Mund des Patienten platziert zu werden,
b) ein erstes System zum Erfassen auf Computer der Scannerdaten der Führung, und des Unterkiefers oder des Oberkiefers (7) des Patienten,
c) ein zweites System zum Simulieren auf Computer des Unterkiefers oder des Oberkiefers (7) ausgehend von den Daten,
d) ein drittes System zum Generieren durch den Computer von Implantatsplanungsparametern ausgehend von der Simulation,
e) ein viertes System zum Bilden der Schablone (11), wobei dieses vierte System computersteuerbar ist,
f) ein fünftes System zum Steuern durch den Computer ausgehend von den Parametern des vierten Systems,
g) Bohrhülsen (18), die koaxial in dem oberen Teil (15) der Führungszylinder (14) angeordnet sind,
h) Bohrer (4, 5) mit Durchmessern, die den Innendurchmessern der Hülsen (18) entsprechen, wobei die Hülsen (18) alle einen einzigen vorbestimmten Standard-Innendurchmesser aufweisen und die Bohrer (4, 5) einen ersten Satz von Stufenbohrern (4) und einen zweiten Satz von Kalibrierbohrern (5) aufweisen, wovon jeweils der Standard-Maximaldurchmesser und der Standard-Nenndurchmesser dem Innendurchmesser der Hülsen (18) entsprechen.

5. Vorrichtung zum Einbringen von Zahnimplantaten (1) nach Anspruch 4, **dadurch gekennzeichnet, dass** jeder der Stufenbohrer (4) nacheinander nach seiner Achse von dem spitzen Ende zu dem anderen Ende Folgendes aufweist:
- eine erste Bohrlänge (30) von einem einzigen Standarddurchmesser, der in Abhängigkeit von dem Typ der Implantate (1) vorbestimmt ist,
- eine zweite Bohrlänge (31), die an die erste Bohrlänge (30) angrenzt, von einem einzigen vorbestimmten Standarddurchmesser, der größer als der Durchmesser der ersten Bohrlänge (30) ist,
- einen glatten Teil (32) von einem einzigen vorbestimmten Standarddurchmesser, der dem Standard-Innendurchmesser der Hülsen (18) entspricht,
- ein Kragen (22), und
- ein Standard-Blockiermittel für ein Handstück (33).

6. Vorrichtung zum Einbringen von Zahnimplantaten (1) nach einem der vorhergehenden Ansprüche 4 oder 5, **dadurch gekennzeichnet, dass** jeder der Kalibrierbohrer (5) nacheinander nach seiner Achse von dem spitzen Ende zu dem anderen Ende Folgendes aufweist:
- eine erste Schnittlänge (34) von einem einzigen vorbestimmten Standarddurchmesser, der dem Standard-Innendurchmesser der Hülsen (18) entspricht,
- eine zweite Schnittlänge (35) von einem Durchmesser, der im Wesentlichen niedriger als der Durchmesser der ersten Schnittlänge (34) ist,
- einen glatten Bereich (36) von einem einzigen vorbestimmten Standarddurchmesser, der dem einzigen Innendurchmesser der Hülsen (18) entspricht,
- ein Kragen (22) und
- ein Standard-Blockiermittel für ein Handstück (33).

7. Vorrichtung zum Einbringen von Zahnimplantaten (1) nach einem der vorhergehenden Ansprüche 4 bis 6, **dadurch gekennzeichnet, dass** die Bohrungen (15) von variablen Höhen sind, um ohne zusätzliches Mittel die Eindringtiefe der Bohrer (4, 5) in den Unterkiefer oder den Oberkiefer (7) zu begrenzen.

8. Vorrichtung zum Einbringen von Zahnimplantaten (1) nach einem der vorhergehenden Ansprüche 5 oder 6, **dadurch gekennzeichnet, dass** sie ferner eine Anordnung von Ringen (21) von einem Innendurchmesser, der dem Durchmesser der Bohrer (4, 5) entspricht, aufweist, wobei die Ringe (21) dazu bestimmt sind, um den glatten Teil (32) oder den glatten Bereich (36) von jedem der Bohrer (4, 5) eingefügt zu werden, um die Eindringtiefe zu kontrollieren.

9. Vorrichtung zum Einbringen von Zahnimplantaten (1) nach einem der vorhergehenden Ansprüche 5 oder 6, **dadurch gekennzeichnet, dass** die Stufenbohrer (4) und die Kalibrierbohrer (5) alle von einer einzigen Standardlänge sind, die in Abhängigkeit von dem Typ der Implantate (1) vorbestimmt ist, unahbängig von der Tiefe der zu erstellenden Löcher (17), wodurch auf diese Weise universelle Bohrer gebildet werden.

10. Vorrichtung zum Einbringen von Zahnimplantaten (1) nach einem der vorhergehenden Ansprüche 4 bis 9, **dadurch gekennzeichnet, dass** die Zylinder (14) und die Hülsen (18) jeweils ein Innengewinde (25) und ein Außengewinde (26) aufweisen, die vier Schraubenlinien um 90° voneinander aufweisen.

11. Vorrichtung zum Einbringen von Zahnimplantaten (1) nach einem der vorhergehenden Ansprüche 4 bis 10, **dadurch gekennzeichnet, dass** jede der Hülsen (18) einen Ring (27) aufweist, der eine tangentiale Öffnung (29) aufweist.

12. Vorrichtung zum Einbringen von Zahnimplantaten (1) nach einem der vorhergehenden Ansprüche 4 bis 11, **dadurch gekennzeichnet, dass** jede der Hülsen (18) einen Ring (27) aufweist, der vier radiale Sacklöcher (28) um 90° voneinander aufweist.

13. Vorrichtung zum Einbringen von Zahnimplantaten (1) nach einem der vorhergehenden Ansprüche 8 oder 11, **dadurch gekennzeichnet, dass** die Ringe (21) und die Scheiben (23) aus einem biokompatiblen Kunststoff, vorzugsweise aus Polyoxymethacrylat (POM), hergestellt sind.

14. Vorrichtung zum Einbringen von Zahnimplantaten nach einem der vorhergehenden Ansprüche 1 bis 13, **dadurch gekennzeichnet, dass** die Zylinder (14) aus einer Titanlegierung, vorzugsweise TA6V, sind.

15. Vorrichtung zum Einbringen von Zahnimplantaten (1) nach einem der vorhergehenden Ansprüche 4 bis 14, **dadurch gekennzeichnet, dass** Hülsen (18) aus Stahl, vorzugsweise aus INOX 316L, sind.

16. Vorrichtung zum Einbringen von Zahnimplantaten (1) nach einem der vorhergehenden Ansprüche 1 bis 15, **dadurch gekennzeichnet, dass** der Dorn (37) aus einer Titanlegierung, vorzugsweise TA6V, ist.

## Claims

1. Device for inserting dental implants (1), comprising:
a) a drilling template (11) comprising bores (15) having predetermined axes and positions, which are provided with at least one guiding cylinder (14) with predetermined dimension, b) at least one implant support (3) consisting of:
- on the one hand, a mandrel (37) featuring successively along its axis:
= a piece (39) complementary to a tool holder,
= a flange (22), adapted to go solid on the upper part of said guiding cylinder (14),
= a smooth sleeve (24) having one standard predetermined outer diameter corresponding to the standard inner diameter of said cylinders (14),
= a form (41) complementary to the standard head (42) of said implants (1), and
- on the other hand, a screw (38) adapted to pass through said mandrel (37) and to be screwed into said head (42).

2. Device for inserting dental implants (1) according to claim 1, further comprising a set of washers (23) having an inner diameter corresponding to the diameter of the implant support (3), said washers (23) being intended to be inserted around the smooth sleeve (24) of each said implant supports (3) in order to control the penetration depth.

3. Device for inserting dental implants (1) according to any one of claims 1 to 2, wherein the implant support (3) has a predetermined standard length, whatever the height of said implants (1) to be inserted, thereby constituting universal implant supports.

4. Device for inserting dental implants (1) according to any one of preceding claims 1 to 3, comprising:
a) a scanographic guide intended to be placed in the patient's mouth,
b) a first system for acquisition on a computer of the scanner data of said guide, and of the mandible or the maxilla (7) of said patient,
c) a second system for simulation on a computer of said mandible or said maxilla (7) on the basis of said data,
d) a third system for generation by computer of parameters for implanting planning on the basis of said simulation,
e) a fourth system for formation of said template (11), this fourth system being able to be computer controlled,
f) a fifth system for computer control based on said parameters of said fourth system,
g) drill bushings (18) coaxially arranged in the upper part (15) of said guiding cylinders (14),
h) drills (4, 5) having diameters corresponding to the inner diameters of said bushings (18), said bushings (18) all featuring a single predetermined standard inner diameter and said drills (4, 5) featuring a first set of staged drills (4) and a second set of calibration drills (5), the standard maximum diameter and the standard nominal diameter of which correspond to the inner diameter of said bushings (18), respectively.

5. Device for inserting dental implants (1) according to claim 4, **characterized in that** each of the staged drills (4) features successively, along its axis, from the pointy extremity to the other extremity :
- a first drilling length (30) having a single predetermined standard diameter depending on the type of said implants (1),
- a second drilling length (31), adjacent to said first drilling length (30), having a single predetermined standard diameter, larger than the diameter of said first drilling length (30),
- a smooth part (32) having a single predetermined standard diameter, corresponding to the standard inner diameter of said bushings (18),
- a flange (22), et
- a standard blocking means (33) for handpiece.

6. Device for inserting dental implants (1) according to any one of preceding claims 4 or 5, **characterized in that** each of calibration drills (5) features successively along its axis, from the pointy extremity to the other extremity :
- a first cutting length (34) having one standard predetermined diameter corresponding to the standard inner diameter of said bushings (18),
- a second cutting length (35) having a diameter substantially smaller than the diameter of said first cutting length (34),
- a smooth area (36) having a single predetermined standard diameter corresponding to the single inner diameter of said bushings (18),
- a flange (22), and
- a standard blocking means for handpiece (33).

7. Device for inserting dental implants (1) according to any one of preceding claims 4 to 6, **characterized in that** the bores (15) have varying heights in order to limit, without any further means, the penetration depth of the drills (4, 5) into the mandible or the maxilla (7).

8. Device for inserting dental implants (1) according to any one of preceding claims 5 or 6, **characterized in that** it further comprises a set of rings (21) having an inner diameter corresponding to the diameter of the drills (4, 5), said rings (21) being intended to be inserted around the smooth part (32) or the smooth area (36) of each of the drills (4, 5) in order to control the penetration depth.

9. Device for inserting dental implants (1) according to any one of preceding claims 5 or 6, **characterized in that** the staged drills (4) and the calibration drills (5) all have one predetermined standard length in function of the type of said implants (1), independent of the depth of the holes (17) to be achieved, thereby constituting universal drills.

10. Device for inserting dental implants (1) according to any one of preceding claims 4 to 9, **characterized in that** the cylinders (14) and the bushings (18) have respectively an inner thread (25) and an outer thread (26) featuring four helices at 90° with respect to each other.

11. Device for inserting dental implants (1) according to any one of preceding claims 4 to 10, **characterized in that** each of the bushings (18) features a ring (27) having a tangential lumen (29).

12. Device for inserting dental implants (1) according to any one of preceding claims 4 to 11, **characterized in that** each of the bushings (18) features a ring (27) having four radial blind holes (28) at 90° with respect to each other.

13. Device for inserting dental implants (1) according to any one of preceding claims 8 or 11, **characterized in that** the rings (21) and the washers (23) are made of biocompatible plastic material, preferably polyoxymethacrylate (POM).

14. Device for inserting dental implants according to any one of preceding claims 1 to 13, **characterized in that** the cylinders (14) are made of titanium alloy, preferably TA6V.

15. Device for inserting dental implants (1) according to any one of preceding claims 4 to 14, **characterized in that** the bushings (18) are made of steel, preferably INOX 316L.

16. Device for inserting dental implants (1) according to any one of claims 1 to 15, **characterized in that** the mandrel (37) is made of titanium alloy, preferably TA6V.
